Europäisches Patentamt

(19) European Patent Office

Office européen des brevets

(11) EP 0 656 266 B1

## (12) EUROPEAN PATENT SPECIFICATION

(45) Date of publication and mention
of the grant of the patent:
06.11.1996 Bulletin 1996/45

(51) Int. Cl.$^6$: **B60C 1/00**, C08K 5/09,
C08L 21/00, C08K 3/04

(21) Application number: 94308784.1

(22) Date of filing: 29.11.1994

(54) **Rubber composition for steel belts**

Kautschukmischung für Stahlbänder

Composition de caoutchouc pour des bandes d'acier

(84) Designated Contracting States:
**DE FR GB**

(30) Priority: **01.12.1993 JP 301763/93**

(43) Date of publication of application:
**07.06.1995 Bulletin 1995/23**

(73) Proprietor: **Sumitomo Rubber Industries Ltd.
Kobe-shi, Hyogo-ken (JP)**

(72) Inventors:
• **Nakada, Yoko
Kobe-shi, Hyogo-ken (JP)**
• **Fukumoto, Takahiro
Kobe-shi, Hyogo-ken (JP)**
• **Muraoka, Kiyoshige
Kobe-shi, Hyogo-ken (JP)**

(74) Representative: **Stewart, Charles Geoffrey
SP TYRES UK LIMITED
Technical Division
Fort Dunlop, Erdington, Birmingham B24 9QT
(GB)**

(56) References cited:
• **DATABASE WPI Week 8431, Derwent
Publications Ltd., London, GB; AN 192385 & JP-
A-59 109 538 (YOKOHAMA RUBBER KK) 25 June
1984**
• **CHEMICAL ABSTRACTS, vol. 101, no. 18, 29
October 1984, Columbus, Ohio, US; abstract no.
153328,**
• **DATABASE WPI Week 8431, Derwent
Publications Ltd., London, GB; AN 192385 & JP-
A-59 109 538**
• **CHEMICAL ABSTRACTS, vol. 101, no. 18, 29
October 1984, Columbus, Ohio, US; abstract no.
153328 & JP-A-59 074 135**

## Description

The present invention relates to a rubber composition for steel belts, which can provide tires assuring a low rolling resistance, low noise, and excellent handling stability and riding comfort.

The recent demand for resource and energy savings requires tires for cars to be low in rolling resistance and light in weight in order to decrease fuel consumption. For lowering the rolling resistance, such improvements as decreasing a hysteresis loss of a tread rubber have been made.

However the decrease in hysteresis loss of the tread rubber causes problems such that handling stability becomes lowered and noise becomes large.

The present invention is made to solve the above-mentioned problems and provides a rubber composition for tires having a low noise, excellent handling stability and riding comfort, and lowered rolling resistance.

As a result of the inventors' intensive studies for solving the above-mentioned problems, it was discovered that a tire having a lowered rolling resistance could be obtained without making worse a noise level, handling stability and riding comfort, by using a rubber for steel belts, that is to say, a rubber for covering steel belts, in which a specific carbon black, a cobalt salt of an organic acid and sulfur are blended in the specific ratio, and thus the present invention has been completed.

According to the present invention, there can be provided a rubber composition for steel belts, which comprises 100 parts (part by weight, hereinafter the same) of a rubber component, 40 to 50 parts of a carbon black having an iodine adsorption number of 60 to 100 mg/g and a dibuthyl phthalate (hereinafter referred to as "DBP") absorption number of 60 to 110 m$\ell$ /100 g, 1 to 3 parts of the cobalt salt of the organic acid and 2.5 to 3.5 parts of sulfur.

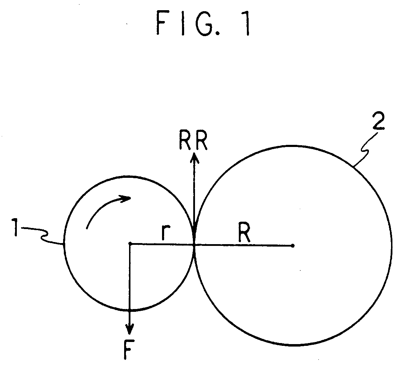

Fig. 1 is a diagrammatic sectional view showing a method to measure a rolling resistance of a tire.

The rubber component to be used in the present invention is not specifically limited. Preferred rubber component is a natural rubber and an isoprene rubber from viewpoints of good processability, low heat generation and excellent adhesion. Those rubbers may be used in an admixture mixed in an optional mixing ratio.

The rubber composition of the present invention is prepared by blending, per 100 parts of the rubber component, 40 to 50 parts, preferably 40 to 45 parts of the carbon black having the iodine adsorption number of 60 to 100 mg/g, preferably 80 to 100 mg/g and the DBP absorption number of 60 to 110 m$\ell$ /100 g, preferably 65 to 95 m$\ell$ /100 g.

In the present invention, the iodine adsorption number represents an iodine adsorption number measured in accordance with JIS K 6221, and the DBP absorption number represents a dibutyl phthalate absorption amount measured in accordance with JIS K 6221.

When the iodine adsorption number becomes less than 60 mg/g, a reinforcing ability of the carbon black tends to be lowered, and when more than 100 mg/g, processability of the composition at the time of kneading and dispersibility of the carbon black tend to become worse. When the DBP absorption number becomes less than 60 m$\ell$ /100 g, the modulus of elasticity of the vulcanized rubber composition tends to become too low, and when more than 110 m$\ell$ /100 g, the modulus of elasticity of the vulcanized rubber composition tends to become too high and the reinforcing ability of the carbon black also tends to become worse. When the blending amount of the carbon black is less than 40 parts, the modulus of elasticity of the vulcanized rubber composition becomes too low, and the reinforcing ability of the carbon black tends to be lowered. When more than 50 parts, the modulus of elasticity of the vulcanized rubber composition becomes too high and the desired effects, i.e. the reduction of the rolling resistance and the lowering of the noise level and the improvement of the riding comfort tend to become impossible.

In the present invention, the cobalt salt of the organic acid is blended to increase adhesion to steel cords. As the cobalt salt of the organic acid, there are used, for example, cobalt naphthenate, cobalt oleate, cobalt maleate and cobalt stearate. Among those, cobalt naphthenate and cobalt stearate are preferable from a viewpoint of increasing both adhesion and processability. The blending amount of cobalt salt of the organic acid is 1 to 3 parts, preferably 1.5 to 2.5 parts. When less than 1 part, adhesion to the steel cords tends to be insufficient, and when more than 3 parts, it is not desirable because the heat resistance of the adhesion to the steel cords tends to become worse.

The sulfur to be used in the present invention is the insoluble sulfur from a viewpoint to prevent deterioration of adhesion due to blooming. The blending amount of the sulfur is 2.5 to 3.5 parts, preferably 3.0 to 3.5 parts. When less than 2.5 parts, adhesion to the steel cords tends to be insufficient, and when more than 3.5 parts, it is not preferable because a complex modulus E* tends to become too high.

The rubber composition of the present invention further contains 5 to 15 parts, specifically 10 to 15 parts of the liquid polyisoprene per 100 parts of the rubber component. The liquid polyisoprene is used to decrease the modulus of elasticity of the vulcanized rubber composition and to enhance a loss tangent (tan $\delta$ ). The lowering of the modulus of elasticity of the vulcanized rubber composition is preferable for the reduction of the rolling resistance and the enhancement of the riding comfort, while the enhancement of the loss tangent (tan $\delta$) is preferable for increase in handling stability. When the liquid polyisoprene content is less than 5 parts, the modulus of elasticity of the vulcanized rubber composition does not decrease sufficiently and the loss tangent (tan $\delta$) is not fully enhanced. When the liquid polyisoprene content becomes more than 15 parts, the modulus of elasticity becomes too low and also the processability becomes worse.

In addition to the rubber component, the carbon black, the cobalt salt of the organic acid and the sulfur, the rubber composition of the present invention may contain, if necessary, usual additives for tire rubbers, for example, an antioxidant, a softening agent, zinc oxide, stearic acid, a vulcanizing accelerator and a vulcanizing agent in proper amounts.

A preferable rubber composition of the present invention is a rubber composition which can provide a vulcanized rubber composition having the complex modulus $E^*$ of 4.0 to 5.5 MPa, specifically 4.0 to 5.0 MPa and the loss tangent (tan $\delta$) of 0.13 to 0.21, specifically 0.15 to 0.18 measured under the conditions of 10 % of initial strain, 2 % of dynamic displacement, 10 Hz of vibration frequency and 70°C of temperature. When the complex modulus $E^*$ becomes less than 4.0 MPa, durability of tires tends to be lowered. When more than 5.5 MPa, there is a tendency that the reduction of the rolling resistance, the lowering of the noise level and the improvement of the riding comfort become insufficient. When the loss tangent (tan $\delta$) becomes less than 0.13, the rolling resistance of tires decreases but the handling stability of a car tends to be lowered. When the loss tangent becomes more than 0.21, the heat generation is increased and the durability of the tires becomes lowered.

In the present invention, the complex modulus $E^*$ and the loss tangent (tan $\delta$) are those measured by the use of a viscoelasticity spectrometer (available from Kabushiki Kaisha Iwamoto Seisakusho) under the conditions of 10 % of initial strain, 2 % of dynamic displacement, 10 Hz of vibration frequency and 70°C of temperature.

The present invention is explained by means of Examples, but is not limited thereto.

Example 1

Experimental Example 1-1

A rubber composition for steel belts was prepared by using the following components and kneading them with a banbury mixer at about 150°C.

Natural rubber
Carbon black A[1]
Mineral oil
Zinc oxides
Stearic acid
Cobalt naphthenate
Antioxidant[2]
Insoluble sulfur
Vulcanizing accelerator[3]

As the carbon black A[1], antioxidant[2] and vulcanizing accelerator[3], there were used Shoblack N326 (iodine adsorption number of 82 mg/g, DBP absorption number of 72 m$\ell$ /100 g) available from Showa Cabbot Kabushiki Kaisha, Noclac 224 (poly( 2,2,4-trimethyl-1,2-dihydroquinone)) available from Ohuchi Shinko Kagaku Kogyo Kabushiki Kaisha, and Nocceler DZ (N, N-dicyclohexyl-2-benzothiazolylsulfenamide) available from Ohuchi Shinko Kagaku Kogyo Kabushiki Kaisha, respectively.

Experimental Examples 1-2 to 1-10

The rubber composition was prepared in the same manner as in Experimental Example 1-1 except that the blending ratios of the natural rubber, the liquid polyisoprene, the carbon black, the mineral oil and the insoluble sulfur were changed as shown in Table 1.

As the liquid polyisoprene, carbon black B, and carbon black C, there were used LIR-50 available from Kuraray Co., Ltd., Shoblack N234 (iodine adsorption number of 118 mg/g, DBP absorption number of 125 m$\ell$/100 g) available from Showa Cabbot Kabushiki Kaisha, and Shoblack N550 (iodine adsorption number of 43 mg/g, DBP absorption number of 121 m$\ell$/100 g) available from Showa Cabbot Kabushiki Kaisha, respectively.

Table 1

| | Experimental Examples | | | | | | | | | |
|---|---|---|---|---|---|---|---|---|---|---|
| | 1-1 | 1-2 | 1-3 | 1-4 | 1-5 | 1-6 | 1-7 | 1-8 | 1-9 | 1-10 |
| Natural rubber | 100 | 100 | 100 | 100 | 100 | 100 | 100 | 100 | 100 | 100 |
| Liquid polyisoprene | - | 10 | - | - | - | - | - | - | 10 | - |
| Carbon black | | | | | | | | | | |
| A | 45 | 45 | 50 | 55 | - | - | 45 | 55 | 45 | 35 |
| B | - | - | - | - | 45 | - | - | - | - | - |
| C | - | - | - | - | - | 45 | - | - | - | - |
| Mineral oil | 5 | - | 5 | - | 5 | 5 | 5 | 5 | - | 5 |
| Insoluble sulfur | 3 | 3 | 3 | 4.5 | 3 | 3 | 4 | 3 | 2 | 3 |

Example 2

Experimental Example 2-1

The viscoelastic characteristics of the vulcanized rubber composition of Experimental Example 1-1, that is to say, the complex modulus and the loss tangent (tan $\delta$) were measured with a viscoelasticity spectrometer (Kabushiki Kaisha Iwamoto Seisakusho) under the conditions of 10 % of initial strain, 2 % of dynamic displacement, 10 Hz of vibration frequency and 70°C of temperature.

The results are shown in Table 2.

The tires having a size of 185/65R14 were manufactured by using the rubber composition of Experimental Example 1-1 as the rubber composition for steel belts. Those tires were attached to the 1800 cc domestic passenger car of FR (front-engine, rear-drive) type, and the car was run in the test course in Okayama of Sumitomo Rubber Industries, Ltd. to evaluate the following characteristics of tires.

(Rolling Resistance)

By using a rolling resistance machine (available from Kobe Kikai Kabushiki Kaisha), the tire 1 was brought into contact with the drum 2 of the machine as shown in Fig. 1. A force (F(kgf): shown by an arrow in Fig. 1), which an axis of the tire 1 received at 80 km/hr, was measured, and the rolling resistance (RR(kgf): shown by an arrow in Fig. 1) was calculated by the following formula:

$$RR = F \times (1 + r/R)$$

r: A radius of the tire 1
R: A radius of the drum 2 of the machine

The rolling resistance was evaluated as an index to the value (100) of Experimental Example 2-4, in which there was employed the tire using the rubber composition of Experimental Example 1-4 for steel belts, which was considered to be a usual rubber composition for the steel belt.

(Steering Stability)

The handling stability is evaluated by the subjective test, with an index to the value (5) of Experimental Example 2-4, in which the tires using the rubber composition of Experimental Example 1-4 on the steel belt were employed. The index more than 6 is desirable.

(Riding Comfort)

The riding comfort is evaluated by the subjective test, with the index to the value (5) of Experimental Example 2-4, in which the tires using the rubber composition of Experimental Example 1-4 on the steel belt were employed. The index more than 6 is desirable.

(Road Noise)

The road noise is evaluated by the subjective test, with the index to the value (5) of Experimental Example 2-4, in which the tires using the rubber composition of Experimental Example 1-4 on the steel belt were employed. The index more than 6 is desirable.

Experimental Examples 2-2 to 2-10

The complex modulus $E^*$ and the loss tangent (tan $\delta$) of the vulcanized rubber composition of Experimental Examples 1-2, 1-3, 1-4, 1-5, 1-6, 1-7, 1-8, 1-9 and 1-10 were measured in the same manner as in Experimental Example 2-1. The results are shown in Table 2.

The tires having a size of 185/65R14 and being similar to those of Experimental Example 2-1 were manufactured by using the rubber compositions of Experimental Examples 1-2, 1-3, 1-4, 1-5, 1-6, 1-7, 1-8, 1-9 and 1-10 as those for the steel belt, and in the same manner as in Experimental Example 2-1, the rolling resistance, the handling stability, the riding comfort and the road noise were evaluated. The results are shown in Table 2.

Table 2

| | Experimental Examples | | | | | | | | | |
|---|---|---|---|---|---|---|---|---|---|---|
| | 2-1 | 2-2 | 2-3 | 2-4 | 2-5 | 2-6 | 2-7 | 2-8 | 2-9 | 2-10 |
| Experimental Example numbers of rubber compositions used | 1-1 | 1-2 | 1-3 | 1-4 | 1-5 | 1-6 | 1-7 | 1-8 | 1-9 | 1-10 |
| Viscoelastic characteristics of rubber compositions | | | | | | | | | | |
| $E^*$ | 4.2 | 4.6 | 5.1 | 8.6 | 5.9 | 3.8 | 5.6 | 6.2 | 5.9 | 3.0 |
| Tan $\delta$ | 0.14 | 0.19 | 0.18 | 0.11 | 0.16 | 0.10 | 0.12 | 0.17 | 0.22 | 0.11 |
| Characteristics of tires | | | | | | | | | | |
| Rolling resistance | 96 | 97 | 98 | 100 | 100 | 96 | 97 | 102 | 104 | 95 |
| Handling stability | 6 | 6 | 7 | 5 | 6 | 4 | 5 | 7 | 7 | 4 |
| Riding comfort | 7 | 7 | 6 | 5 | 6 | 5 | 5 | 5 | 5 | 7 |
| Road noise | 6 | 6 | 6 | 5 | 5 | 5 | 5 | 6 | 6 | 5 |

In Example 2, Experimental Examples 2-1, 2-2 and 2-3 using the rubber compositions (Experimental Examples 1-1, 1-2 and 1-3) of the present invention for the steel belt showed the excellent results. In Experimental Example 2-4, excellent results could not be obtained because the carbon black content was as much as 55 parts and the sulfur content was also high. In Experimental Example 2-5, since the DBP absorption number and the iodine adsorption number of the used carbon black were high, good results could not be obtained for both the rolling resistance and the road noise. Experimental Example 2-6 indicates that since the iodine adsorption number of the used carbon blacks was low and the DBP absorption number thereof was high, the handling stability was inferior. Experimental Example 2-7 shows that since the insoluble sulfur content was high, the handling stability was inferior. In Experimental Example 2-8, because the carbon black content was high, the riding comfort and rolling resistance did not give good results. Experimental Example 2-9 showed the inferior rolling resistance because of a low sulfur content. In Experimental Example 2-10, the handling stability was inferior because of a low carbon black content.

The use of the rubber composition of the present invention for the steel belt can not only contribute to the lowering of fuel consumption of cars because of the low rolling resistance, but also provide tires being excellent in noise level, handling stability and riding comfort.

## Claims

1. A rubber composition for steel belts, comprising 100 parts by weight of a rubber component, 40 to 50 parts by weight of a carbon black having an iodine adsorption number of 60 to 100mg/g and a DBP absorption number of 60 to 110m$\ell$/100g, 1 to 3 parts by weight of a cobalt salt of an organic acid, 2.5 to 3.5 parts by weight of a insoluble sulfur, and 5 to 15 parts by weight of a liquid polyisoprene.

2. The rubber composition for steel belts of claim 1, characterised in that the vulcanised rubber composition has a complex modulus E* of 4.0 to 5.5MPa and a loss tangent of 0.13 to 0.21 measured under the conditions of 10% of initial strain, 2% of dynamic displacement, 10HZ of vibration frequency and 70°C of temperature.

3. The rubber composition for steel belts of claim 1 or 2, characterised in that the content of the cobalt salt of the organic acid is 1.5 to 2.5 parts by weight and the content of the insoluble sulfur is 3.0 to 3.5 parts by weight, per 100 parts by weight of the rubber component.

4. The rubber composition for steel belts of claim 1, 2 or 3, characterised in that the content of the liquid polyisoprene is 10 to 15 parts by weight and the carbon black has an iodine adsorption number of 80 to 100mg/g and a DBP absorption number of 65 to 95m$\ell$/100g and is present at 40 to 45 parts by weight, per 100 parts by weight of the rubber component.

5. The rubber composition for steel belts of any of claims 1 to 4, characterised by the vulcanised rubber composition having a loss tangent of 0.15 to 0.18.

## Patentansprüche

1. Eine Gummizusammensetzung für Stahlgürtel mit 100 Gew.-Teilen einer Gummikomponente, 40 bis 50 Gew.-Teilen eines Carbon Blacks mit einer Jod-Absorbtionszahl von 60 bis 100 mg/g und einer DBP-Absorbtionszahl von 60 bis 110 ml/g, 1 bis 3 Gewichtsteilen einer Kobaltsalzes einer organischen Säure, 2,5 bis 3,5 Gew.-Teilen eines unlösbaren Schwefels und 5 bis 15 Gew.-Teilen eines flüssigen Polyisoprens.

2. Die Gummizusammensetzung für Stahlgürtel von Anspruch 1, dadurch gekennzeichnet, daß die vulkanisierte Gummizusammensetzung einen komplexen Modul E* von 4,0 bis 5,5 MPa und eine Verlustziffer von 0,13 bis 0,21 gemessen unter den Voraussetzungen von 10 % Anfangsbeanspruchung, 2 % dynamischer Versetzung, 10 Hz Schwingungsfrequenz und 70° C Temperatur hat.

3. Die Gummizusammensetzung für Stahlgürtel von Anspruch 1 oder 2, dadurch gekennzeichnet, daß der Anteil des Kobaltsalzes der organischen Säure 1,5 bis 2,5 Gew.-Teile und der Anteil des unlösbaren Schwefels 3,0 bis 3,5 Gew.-Teile pro 100 Gew.-Teile der Gummikomponente beträgt.

4. Die Gummizusammensetzung für Stahlgürtel von Anspruch 1, 2 oder 3, dadurch gekennzeichnet, daß der Anteil des flüssigen Polyisoprens 10 bis 15 Gew.-Teile beträgt und das Carbon Black eine Jod-Absorptionszahl von 80 bis 100 mg/g und eine DBP-Absorbtionszahl von 65 bis 95 ml/100 g hat und mit 40 bis 45 Gew.-Teilen pro 100 Gew.-Teilen der Gummikomponente vorliegt.

5. Die Gummizusammensetzung für Stahlgürtel von irgendeinem der Ansprüche 1 bis 4, dadurch gekennzeichnet, daß die vulkanisierte Zusammensetzung eine Verlustziffer von 0,15 bis 0,18 hat.

## Revendications

1. Composition de caoutchouc pour ceintures d'acier, contenant 100 parties en poids d'un élément constituant de caoutchouc, 40 à 50 parties en poids d'un noir de carbone ayant un indice d'adsorption d'iode de 60 à 100 mg/g et un indice d'absorption de DBP de 60 à 110 cm$^3$/100 g, 1 à 3 parties en poids d'un sel de cobalt d'un acide organique, 2,5 à 3,5 parties en poids de soufre insoluble, et 5 à 15 parties en poids de polyisoprène liquide.

2. Composition de caoutchouc pour ceintures d'acier selon la revendication 1, caractérisée en ce que la composition de caoutchouc vulcanisée possède un module complexe E* de 4,0 à 5,5 MPa et une tangente à l'angle de pertes de 0,13 à 0,21 mesurée pour une déformation initiale de 10 %, un déplacement dynamique de 2 %, une fréquence de vibration de 10 Hz et une température de 70 °C.

3. Composition de caoutchouc pour ceintures d'acier selon la revendication 1 ou 2, caractérisée en ce que la teneur en sel de cobalt de l'acide organique est comprise entre 1,5 et 2,5 parties en poids et la teneur en soufre insoluble est comprise entre 3,0 et 3,5 parties en poids pour 100 parties en poids de l'élément constituant de caoutchouc.

4. Composition de caoutchouc pour ceintures d'acier selon la revendication 1, 2 ou 3, caractérisée en ce que la teneur en polyisoprène liquide est comprise entre 10 et 15 parties en poids, et le noir de carbone a un indice d'adsorption d'iode compris entre 80 et 100 mg/g et un indice d'absorption de DBP de 65 à 95 cm$^3$/100 g, et il est présent à raison de 40 à 45 parties en poids pour 100 parties en poids de l'élément constituant de caoutchouc.

5. Composition de caoutchouc pour ceintures d'acier selon l'une quelconque des revendications 1 à 4, caractérisée en ce que la composition de caoutchouc vulcanisée a une tangente à l'angle de pertes de 0,15 à 0,18.

# FIG. 1